# EUROPEAN PATENT APPLICATION

(11) **EP 4 640 331 A1**
(43) Date of publication of application: **29.10.2025**
(21) Application number: 23907623.5
(22) Date of filing: 15.12.2023
(51) Int. Cl.: B21D 5/04, B21D 5/00, B21D 53/88, G01B 3/20

(54) **PRESSURE MOLDING DEVICE AND PRESSURE MOLDING METHOD**

(30) Priority: 21.12.2022 KR 20220180823
(71) Applicant: POSCO Co., Ltd, Pohang-si, Gyeongsangbuk-do 37859 (KR)
(72) Inventor: LEE, Jae-Wook, Incheon 21985 (KR)
(74) Representative: Meissner Bolte Partnerschaft mbB
(86) International application number: PCT/KR2023/020780
(87) International publication number: WO 2024/136337

(57) **Abstract**

The present invention provides a pressure molding device comprising a dimension measurement portion that is easy to apply in a die and capable of reliably measuring dimensions. One embodiment provides a pressure molding device comprising an upper die and a lower die arranged in a first direction, wherein the upper die comprises a first cam portion which allows, as one of the upper die and the lower die moves in the first direction, part of the lower die to move in a second direction that is different from the first direction, and a material fixing portion which fixes a material along with a material support portion according to the movement in the first direction, and the lower die comprises a second cam portion corresponding to the first cam portion, the material support portion supporting the material, and a molding portion which is moved along with the second cam portion and molds the material. In addition, the pressure molding device further comprises a dimension measurement portion which is located at the lower portion of the molding portion and is movable in the second direction.

## Description

### Technical Field

The present disclosure relates to a pressure molding device and a pressure molding method, and more specifically, to a pressure molding device and a pressure molding method for measuring dimensions of a material formed after pressure molding.

### Background Art

In the automobile industry, to overcome low elongation due to the trend toward high strength materials, cases in which a bending method, instead of a stretching method, is applied are increasing. Thereamong, a cam method may be applied to bending of a workpiece, punching/shaping of a bent surface, re-strike, or the like.

However, in bending of a plate material, an occurrence rate of dimensional errors is increasing due to springback resulting from complex causes, such as an elastic coefficient of a material, stress distribution in a thickness direction, or the like. In particular, it may be more difficult to secure shape fixation when there is a property deviation between coils. In such cases, even when the same die is used, dimensions of a final product may be different, and most manufacturers thus require a process of inspecting the dimensions after the final product may be formed.

A device required for this process may be known as a dimensional inspection device (checking fixture), and may measure main dimensions of a target product. When a defective product is found as a result of dimensional inspection of a molded product through this dimensional inspection device, a die may be modified or post-processing may be added. Most dimensional measurement operations may be performed manually. Recently, an automatic measurement system using a visual inspection device has been introduced for large components, but use thereof may be very limited due to price issues.

Meanwhile, Patent Document 1 discloses a configuration in which a laser distance measuring device is disposed on a material support portion of a lower die and a distance is measured after molding. However, there may be a problem in that the material support portion has a narrow space, making it difficult to dispose the distance measuring device.

(Patent Document 1) KR 10-2022-0076857 A

### Summary of Invention

### Technical Problem

The present disclosure is intended to solve the problems of the above-mentioned prior art, and aims to provide a pressure molding device including a dimension measurement portion that is easy to apply in a die and capable of reliably measuring dimensions.

### Solution to Problem

In order to achieve the above-mentioned purpose, the present disclosure provides a pressure molding device and a pressure molding method as follows:

In an embodiment, the present disclosure may provide a pressure molding device including an upper die and a lower die, disposed in a first direction, wherein the upper die includes a first cam portion allowing a portion of the lower die to move in a second direction, different from the first direction, as one of the upper die or the lower die moves in the first direction, and a material fixing portion that fixes a material, together with a material support portion, according to movement in the first direction, and the lower die includes a second cam portion corresponding to the first cam portion, the material support portion supporting the material, and a molding portion configured to move to mold the material, together with the second cam portion, wherein the pressure molding device further includes a dimension measurement portion located in a lower portion of the molding portion and configured to be movable in the second direction.

In an embodiment, the second cam portion and the molding portion may be provided on the same moving block, and the dimension measurement portion may include a contact-type displacement sensor.

In an embodiment, the pressure molding device may further include a press driving unit moving the upper die in the first direction; and a control unit connected to the press driving unit and the dimension measurement portion, wherein the material fixing portion may be disposed such that a position of a lower end portion of the material fixing portion is lower than a position of a lower end portion of the first cam portion, and the control unit may measure a degree of molding of the material with the dimension measurement portion, after the upper die reaches bottom dead center by the press driving unit.

The present disclosure may provide, in an embodiment, a pressure molding device including a molding operation of molding a material through a pressure molding device; and a dimension measuring operation of measuring a dimension of a molded material, wherein the molding operation may include a material fixing operation of pressing and fixing the material disposed on a material support portion in a first direction, which is an upward-downward direction, through a material fixing portion; and a bending and molding operation of pressing and bending the material located on a side surface of the material support portion with a molding portion in a second direction, different from the first direction; and the dimension measuring operation may be performed in a state in which the bending and molding operation is completed but fixation of the material is maintained, and is performed by moving a dimension measurement portion in the second direction to contact the molded material, and then measuring a moving distance of the dimension measurement portion.

### Advantageous Effects of Invention

The present disclosure may provide a pressure molding device and a pressure molding method, including a dimension measurement portion that is easy to apply in a die and capable of reliably measuring dimensions.

### Brief Description of Drawings

FIG. 1 is a schematic diagram of a pressure molding device according to an embodiment of the present disclosure.
FIG. 2 is a schematic perspective view of the moving block of FIG. 1.
FIG. 3 is a schematic view of the dimension measurement portion of FIG. 1.
FIGS. 4 to 9 are schematic views illustrating a moving operation of a pressure molding device according to an embodiment of the present disclosure.
FIG. 10 is a flow chart of a pressure molding method according to an embodiment of the present disclosure.

### * Description of Symbols *

1: Pressure Molding Device 100: Upper Die
110: Material Fixing Portion 120: First Cam Portion
200: Lower Die 210: Material Support Portion
220: Second Cam Portion 230: Molding Portion
231: Molding Surface 240: Groove
250: Moving Block 260: Dimension Measurement Portion
261: Main Body 262: Rod
263: Connection Portion 265: Sensor
270: Elastic Member

### Best Mode for Invention

Hereinafter, with reference to the attached drawings, preferred embodiments will be described in detail such that those skilled in the art may easily implement the present disclosure. However, when describing preferred embodiments of the present disclosure in detail, if it may be determined that a specific description of a related known function or configuration may unnecessarily obscure the gist of the present disclosure, the detailed description thereof will be omitted. In addition, the same symbols may be used throughout the drawings for parts having similar functions and actions. In addition, in this specification, terms such as 'on,' 'above,' 'upper portion,' 'upper surface,' 'below,' 'lower portion,' 'lower surface,' 'side surface,' or the like may be based on the drawings, and may actually vary depending on a direction in which elements or components are disposed.

In addition, throughout the specification, when a portion may be said to be 'connected' to another portion, this includes not only a case in which it is 'directly connected' but also a case in which it is 'indirectly connected' with another element therebetween. In addition, 'including' or 'comprising' a component means that, unless specifically stated otherwise, it does not exclude other components but may further include other components.

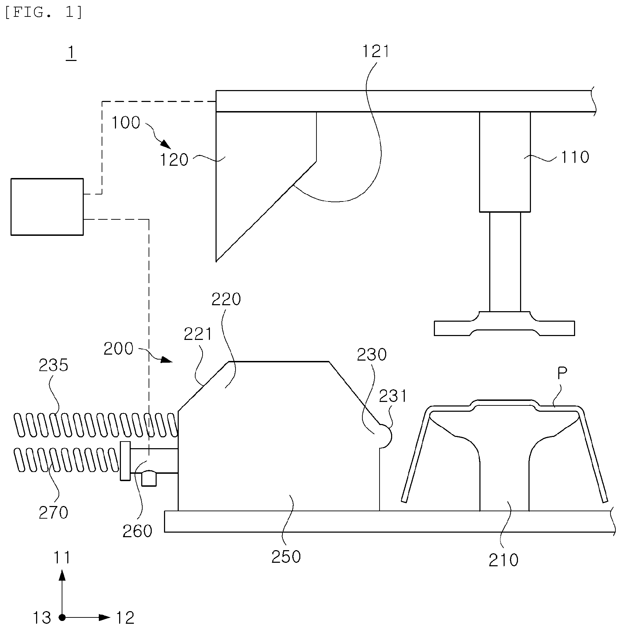

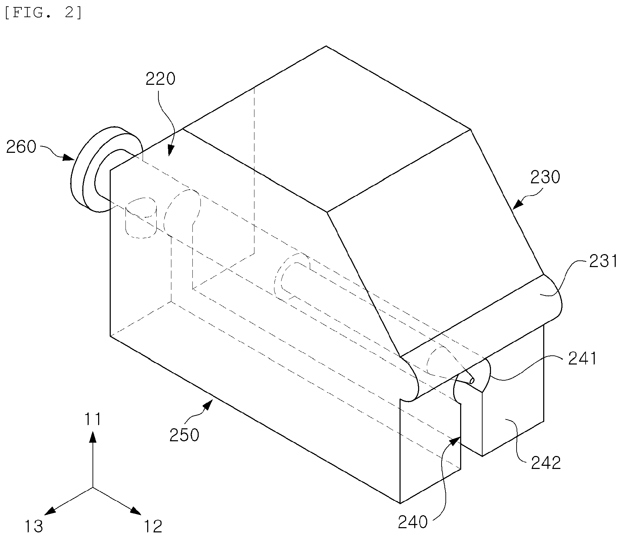

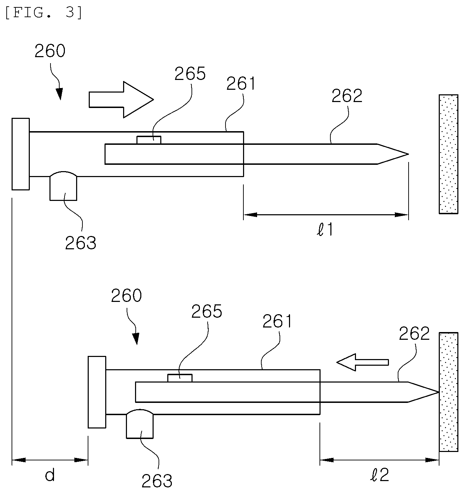

FIG. 1 is a schematic diagram of a pressure molding device according to an embodiment of the present disclosure, FIG. 2 is a schematic perspective view of the moving block of FIG. 1, and FIG. 3 is a schematic view of the dimension measurement portion of FIG. 1.

A pressure molding device 1 may include an upper die 100 and a lower die 200. The upper die 100 may be located in an upward-downward direction, which is a first direction 11, and the upper die 100 may be connected to a press driving unit (not illustrated) such that molding is performed while moving toward the lower die 200 according to an operation of the press driving unit.

The upper die 100 may include a first cam portion 120 having an inclined surface 121 formed thereon such that the lower die 100 moves in a left-right direction of FIG. 1, i.e. a second direction 12, perpendicular to the first direction 11 and a direction toward a material P, as it moves in the first direction 11, and a material fixing portion 110 pressing and fixing the material P disposed on a material support portion 210, as the upper die 100 moves in the first direction.

The material fixing portion 110 may be a gas spring, and a lower end portion of the material fixing portion 110 may be located lower than a lower end portion of the first cam portion 120, to fix the material P before movement of a moving block 250, and even after the forming is completed, the material P may be fixed for as long as possible such that the dimension measurement portion 260 measures a dimension of the material P in a state in which the material P is fixed.

The lower die 200 may include the moving block 250 having a second cam portion 220 having an inclined surface 221 corresponding to the inclined surface 121 of the first cam portion 120, to move a molding portion 230 in the second direction 12 in cooperation with the first cam portion 120 as the upper die 100 moves in the first direction 11, and the molding portion 230 configured to move together with the second cam portion 220 and include a molding surface 231 contacting the material P disposed closer to the material P than the second cam portion 220 to bend the material P; the material support portion 210 disposed below the material fixing portion 110 and on which the material P is seated; a dimension measurement portion 260 disposed in a groove 240 formed in a lower portion of the molding portion 230 in the moving block 250; and a control unit 300 connected to the upper die 100 and the dimension measurement portion 260.

The moving block 250 and the dimension measurement portion 260 may be each connected to elastic members 235 and 270, and the elastic member 235 may provide a restoring force for moving away from the material P in a state in which the moving block 250 is not pressed by the upper die, and the elastic member 270 may provide a restoring force for to be located in an original position in a state in which the dimension measurement portion 250 does not measure a dimension.

A portion of the moving block 250 adjacent to the material P may be called the molding portion 230, and a portion of the moving block 250 located below the first cam portion 120 may be called the second cam portion 220. In this embodiment, the molding portion 230 and the second cam portion 220 may be formed in the moving block 250, but may be implemented in a manner in which they are each composed of different blocks and connected to each other.

The first cam portion 120 and the second cam portion 220 may have the inclined surfaces 121 and 221 corresponding to each other, and the molding portion 230 that moves together with the second cam portion 220 due to the inclined surfaces 121 and 221 may move in the second direction 12 instead of the first direction 11, thereby bending the material P.

The molding portion 230 may include the molding surface 231, and may be configured in a manner that only a portion thereof protrudes like this embodiment and presses a portion of the material P with a protruded portion, but it is also possible to form the molding surface 231 in a desired shape corresponding to a desired shape of the material, and to form it in a desired shape together with the material support portion 210.

The moving block 250 may be provided with an LM guide in a lower portion to move only in the second direction 12, and when the first cam portion 120 is lowered by the second cam portion 220 of the moving block 250, the moving block 250 may move in a direction of the material P, and when the first cam portion 120 is raised, the moving block 250 may return to an original position by the elastic member 235.

The groove 240 may be formed in a lower portion of the molding portion 230 in the moving block 250. The groove 240 may be configured to extend in the second direction 12 to have a size that the dimension measurement portion 260 may pass through, such that an operation of the moving block 250 and an operation of the dimension measurement portion 260 do not affect each other. At least a portion of the dimension measurement portion 260 may be disposed in the groove 240. The groove 240 may include a first portion 241 larger than a cross-section of the dimension measurement portion 260, and a second portion 242 extending to a lower surface such that a configuration is disposed to guide movement of the dimension measurement portion 260 in the second direction 12. Therefore, the groove 240 may be configured to extend to a lower surface of the moving block 250 while connecting one surface and the other surface of the moving block 250 in the second direction 12.

The dimension measurement portion 260 may be a contact-type displacement sensor, and a configuration of the dimension measurement portion 260 will be described with reference to FIG. 3. A structure of FIG. 3 is only illustrative, and a different configuration may be applied to the dimension measurement portion 260 if it may accurately measure a distance from a set reference position to a point of the material P.

As illustrated in FIG. 3, the dimension measurement portion 260 may include a cylinder body 261 including a connection portion 263 connected to an air pressure source, a rod 262, and a sensor 265 measuring a movement distance of the rod 262 in the second direction. When air pressure is supplied through the connection portion 263, the dimension measurement portion 260 may move in the second direction 12 as a whole, and accordingly, the rod 262, which may be a tip of the dimension measurement portion 260, may be in contact with the material P.

A distance d moved by the air pressure may be always constant. While moving in the second direction 12, the rod 262 may be in contact with the material P, and may be blocked by the material P and cannot move, so it moves a shorter distance than a distance it moves when there is no material. This means that a length ℓ1 by which the rod 262 protrudes from the main body 261 before moving is shorter than a length ℓ2 by which the rod 262 protrudes from the main body 262 after moving, and thus the rod 262 moves in a backward direction by that magnitude. The sensor 265 may measure a distance by which the rod 262 moves backward, and a degree to which the material P is formed based on the measurement value of the sensor 265.

As the air pressure is released, the rod 262 may return to an original position by an elastic member (not illustrated) disposed in the main body 261, and the main body 261 may also return to the original position by the elastic member 270.

Not this method, a method in which the rod 262 advances by the air pressure and is in contact with the material P, and a method in which a distance moved by the rod 262 is measured by the sensor 265 is also possible.

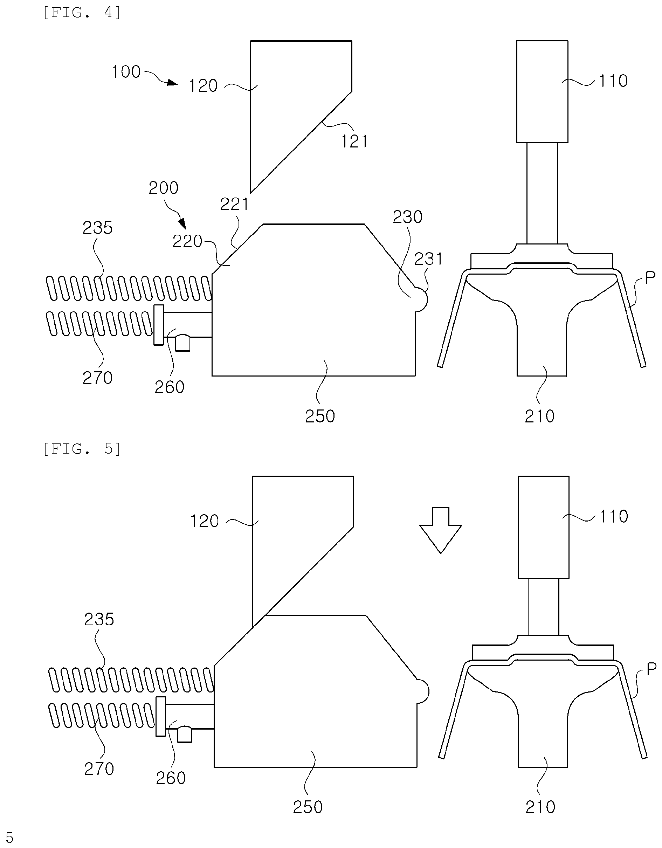

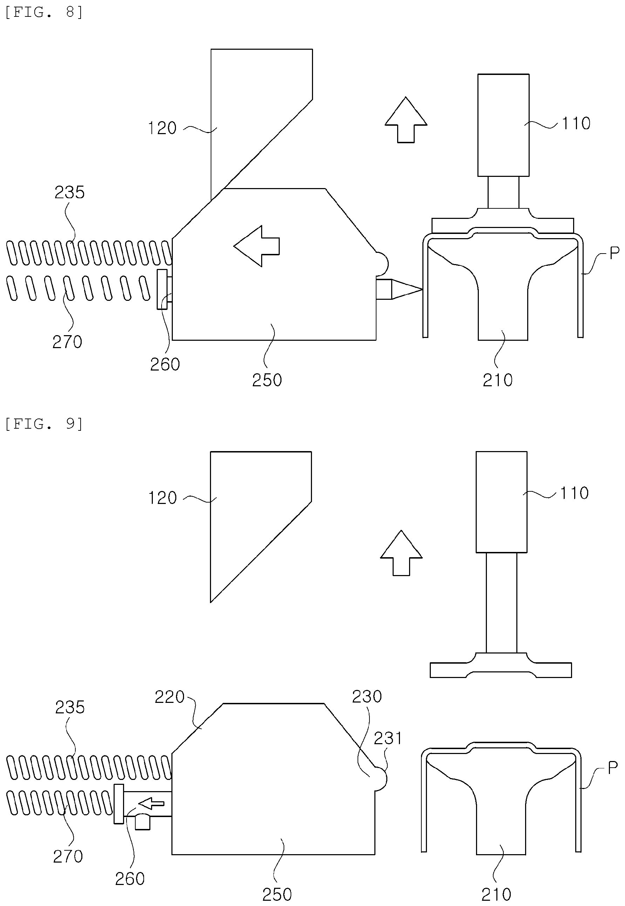

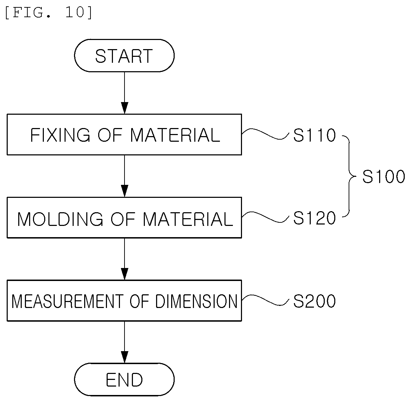

The control unit 300 may be connected to the upper die 100, more precisely, the press driving unit and the dimension measurement portion 260, and may perform control of movement of the upper die 100 in the first direction, control of movement of the dimension measurement portion 260 in the second direction, collection of measurement results of the dimension measurement portion 260, judgment of reprocessing/alarm based on the measurement results, or the like. An operation of the control unit 300 will be described in detail with description of an operation during processing of FIGS. 4 and 9 and a pressure molding method of FIG. 10.

In an embodiment of the present disclosure, the groove 240 may be formed in the lower portion of the moving block 250 provided with the molding portion 230, and the dimension measurement portion 260 may be configured to advance and retreat through the groove 240, such that, after the material P is formed by the molding portion 230, the dimension measurement portion 260 may approach the material P through the groove 240 to measure a degree of molding of the material P. Therefore, since the dimension measurement portion 260 does not have to be disposed in a limited space such as the material support portion 210, it may be not affected by a size of the dimension measurement portion 260, and it is possible to utilize a relatively large but inexpensive and accurate contact-type displacement sensor. In such physical contact-type sensors, since accuracy is higher than that of laser or vision, dimensional measurement itself may also be performed accurately.

In an embodiment of the present disclosure, since the dimensional measurement portion 260 may move separately from the molding portion 230, the movement of the dimensional measurement portion 260 may be not affected by the movement of the upper die 100, so it may be advantageous for measurement timing or molding control.

Referring to FIGS. 4 to 9, how the pressure molding device 1 determines dimensions of the molded material P may be provided in more detail. FIGS. 4 to 9 illustrate movement of a lower die 200 according to movement of an upper die 100 in the first direction 11.

As illustrated in FIG. 4, after a material P is seated, a press driving unit may lower an upper die 100. In this case, since the material fixing portion 110 is lower than the first cam portion 120, the material P may be fixed before the first cam portion 120 meets the second cam portion 220.

As illustrated in FIG. 5, as the upper die 100 descends, the first cam portion 120 may meet the second cam portion 220, and downward movement of the upper die 100 may be converted into second direction movement of a moving block 250 including the second cam portion 220 by an inclined surface 121 of the first cam portion 120 and an inclined surface 221 of the second cam portion 220.

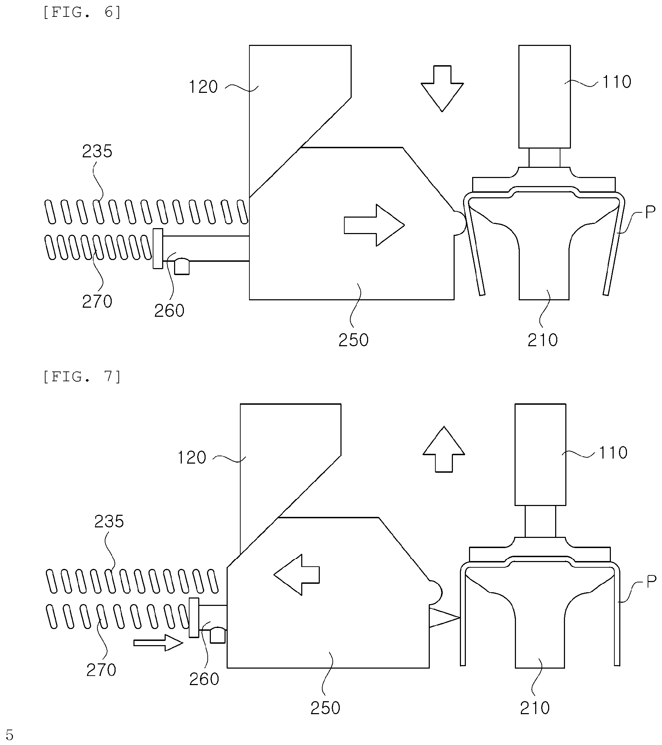

As illustrated in FIG. 6, when the upper die 100 reaches a bottom dead center, the material P may be molded by a molding portion 230 of the moving block 250. Normally, considering springback of the material P, it may be molded more than a desired shape, but it is not limited thereto. Until the upper die 100 reaches the bottom dead center, the dimension measurement portion 260 remains in place without moving.

As illustrated in FIG. 7, the upper die 100 may rise through the bottom dead center, and as the upper die 100 rises, the moving block 250 may return to an original position by an elastic member 235, and since molding is completed, the control unit 300 may provide air pressure to the dimension measurement portion 260, and the dimension measurement portion 260 may move forward along a groove 240 of the moving block 250 in a direction of the material P, thereby measuring dimensions of the molded material P. A dimension measuring method has been described with reference to FIG. 3.

As illustrated in FIG. 8, while the upper die 100 is raised, the control unit 300 may measure dimensions of the material P that has been molded multiple times through the dimension measurement portion 260, thereby improving measurement accuracy. In this case, since the material fixing portion 110 extends below the first cam portion 120, dimension measurement may be performed even after the moving block 250 returns to the original position.

As illustrated in FIG. 9, when the upper die 100 is raised and the material fixing portion 110 is separated from the material P, the dimension measurement portion 260 may also end the dimension measurement and may return to an original position. When measurement is completed, the control unit 300 may decide whether to perform remolding, remove a molded product, whether to send a notification to a user, depending on dimension measurement results, or the like.

FIG. 10 illustrates a flow chart of a pressure molding method according to an embodiment of the present disclosure.

A pressure molding method according to an embodiment of the present disclosure may include a molding operation (S100) of molding a material through a pressure molding device; and a dimension measuring operation (S200) of measuring a dimension of a molded material.

In the pressure molding method of FIG. 10, molding is illustrated as being performed through the pressure molding device 1 described with reference to FIG. 1, but the pressure molding device 1 is not limited to FIG. 1.

The molding operation (S100) may include a material fixing operation (S110) of pressing and fixing a material P disposed on a material support portion 210 in a first direction 11, which is an upward-downward direction, through a material fixing portion 110; and a bending and molding operation (S120) of pressing and bending the material P located on a side surface of the material support portion 210 with a molding portion 230 in a second direction 12, different from the first direction 11.

The dimension measuring operation (S200) may be performed in a state in which the bending and molding operation (S120) is completed but fixation of the material P is maintained, and may be performed by moving a dimension measurement portion 260 in the second direction to contact the molded material, and then measuring a moving distance of the dimension measurement portion 260.

The dimension measuring operation (S200) may be performed multiple times between a point in time at which the moving block 200 retracts in the second direction 12 and a point in time at which the material fixing portion 110 ends pressing of the material P, while the upper die 100 passes the bottom dead center and rises.

Although the present disclosure has been described with reference to an embodiment, but the scope of the present disclosure is not limited to the embodiments illustrated above, and many other modifications based on the present disclosure will be possible for those skilled in the art within the technical scope, as above.

## Claims

1. A pressure molding device comprising:
an upper die and a lower die, disposed in a first direction,
wherein the upper die includes a first cam portion allowing a portion of the lower die to move in a second direction, different from the first direction, as one of the upper die or the lower die moves in the first direction, and a material fixing portion that fixes a material, together with a material support portion, according to movement in the first direction, and
the lower die includes a second cam portion corresponding to the first cam portion, the material support portion supporting the material, and a molding portion configured to move to mold the material, together with the second cam portion,
wherein the pressure molding device further includes a dimension measurement portion located in a lower portion of the molding portion and configured to be movable in the second direction.

2. The pressure molding device of claim 1, wherein the second cam portion and the molding portion are provided on the same moving block, and
the dimension measurement portion includes a contact-type displacement sensor.

3. The pressure molding device of claim 2, wherein a groove extending in the second direction is formed in a lower portion of the moving block, and
the dimension measurement portion is disposed such that at least a portion of the dimension measurement portion is located in the groove, and includes a main body, a rod extending from an internal portion of the main body in the second direction, and a sensor measuring a moving distance of the rod in the main body.

4. The pressure molding device of claim 3, further comprising:
a press driving unit moving the upper die in the first direction; and
a control unit connected to the press driving unit and the dimension measurement portion,
wherein the material fixing portion is disposed such that a position of a lower end portion of the material fixing portion is lower than a position of a lower end portion of the first cam portion, and
the control unit measures a degree of molding of the material with the dimension measurement portion, after the upper die reaches a bottom dead center by the press driving unit.

5. The pressure molding device of claim 4, wherein, in the upper die, the first cam portion is disposed on both sides with respect to the material fixing portion, and
in the lower die, the moving block and the dimension measurement portion are disposed on both sides with respect to the material support portion.

6. A pressure molding method comprising:
a molding operation of molding a material through a pressure molding device; and
a dimension measuring operation of measuring a dimension of a molded material,
wherein the molding operation includes a material fixing operation of pressing and fixing the material disposed on a material support portion in a first direction, which is an upward-downward direction, through a material fixing portion; and a bending and molding operation of pressing and bending the material located on a side surface of the material support portion with a molding portion in a second direction, different from the first direction; and
the dimension measuring operation is performed in a state in which the bending and molding operation is completed but fixation of the material is maintained, and is performed by moving a dimension measurement portion in the second direction to contact the molded material, and then measuring a moving distance of the dimension measurement portion.

7. The method of claim 6, wherein the pressure molding device includes an upper die and a lower die,
the upper die includes a first cam portion allowing a portion of the lower die to move in the second direction, different from the first direction, as one of the upper die or the lower die moves in the first direction, and the material fixing portion,
the lower die includes a second cam portion corresponding to the first cam portion, a moving block having the second cam portion and the molding portion molding the material, and the material support portion on which the material is seated,
the molding operation is performed by lowering the upper die, and
the dimension measuring operation is performed after the upper die reaches a bottom dead center.

8. The method of claim 7, wherein the dimension measuring operation is performed multiple times between a point in time at which the moving block retracts in the second direction and a point in time at which the material fixing portion ends pressing of the material.

9. The method of claim 8, wherein, in the dimension measuring operation, the upper die is raised, the moving block moves away from the material in the second direction, and the dimension measurement portion is moved in the second direction by air pressure.
